(19) Europäisches Patentamt / European Patent Office / Office européen des brevets

(11) **EP 3 754 755 A1**

(12) **EUROPEAN PATENT APPLICATION**
published in accordance with Art. 153(4) EPC

(43) Date of publication:
**23.12.2020 Bulletin 2020/52**

(21) Application number: **19751068.8**

(22) Date of filing: **04.02.2019**

(51) Int Cl.:
*H01M 4/13* (2010.01)     *H01M 4/139* (2010.01)
*H01M 4/62* (2006.01)     *H01M 10/052* (2010.01)
*H01M 10/058* (2010.01)

(86) International application number:
**PCT/JP2019/003891**

(87) International publication number:
**WO 2019/156031 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2018 JP 2018019659**

(71) Applicant: **SEKISUI CHEMICAL CO., LTD.**
**Osaka-shi**
**Osaka**
**530-8565 (JP)**

(72) Inventors:
• **TERANISHI, Rie**
  **Tsukuba-shi, Ibaraki 300-4292 (JP)**
• **OKUDA, Kanta**
  **Tsukuba-shi, Ibaraki 300-4292 (JP)**

(74) Representative: **Müller-Boré & Partner**
**Patentanwälte PartG mbB**
**Friedenheimer Brücke 21**
**80639 München (DE)**

(54) **LITHIUM ION SECONDARY BATTERY ELECTRODE, PRODUCTION METHOD FOR SAME, AND LITHIUM ION SECONDARY BATTERY**

(57)     An electrode for a lithium ion secondary battery, 10, comprises an electrode active substance layer 11, and an insulating layer 12 provided on the surface of the electrode active substance layer 11, wherein the insulating layer 12 comprises an insulative microparticle and a binder for an insulating layer. The interface 12A between the insulating layer 12 and the electrode active substance layer 11 has a roughness of 2 $\mu$m or lower as calculated from observation using a scanning electron microscope.

[1]

**Description**

Technical Field

The present invention relates to an electrode comprising an insulating layer for a lithium ion secondary battery, a method for producing the same, and a lithium ion secondary battery.

Background Art

Lithium ion secondary batteries are utilized as large stationary power sources for power storage, and power sources for electric vehicles and the like, and in recent years, studies on the downsizing and thickness reduction of batteries have been progressed. Lithium ion secondary batteries are usually ones comprising both electrodes each having an electrode active substance layer formed on the surface of a metal foil, and a separator arranged between both the electrodes. The separator plays a role of preventing a short circuit between both the electrodes and holding an electrolyte solution.

Conventionally, in order to provide lithium ion secondary batteries with a good short circuit-suppressing function, for example, even when their separator has shrunk or the like, it is studied to provide a porous insulating layer on the surface of an electrode active substance layer. It is known, for example, as disclosed in PTL1, that an insulating layer is formed by applying and drying a slurry for an insulating layer containing an insulative microparticle, a binder and a solvent onto an electrode active substance layer.

Citation List

Patent Literature

PTL1: International Publication No. WO2016/104782

Summary of Invention

Technical Problem

Conventional insulating layers, however, are insufficient in the short circuit-suppressing effect by the insulating layers in some cases, and the short circuit-suppressing effect needs to be further improved. In PTL1, although the regulation of the surface roughness of an electrode active substance layer before the formation of an insulating layer is disclosed, there is no indication of improving the short circuit-suppressing effect by regulating the interfacial roughness between the insulating layer after the formation thereof and the electrode active substance layer.

Then, the present invention has an object to provide an electrode for a lithium ion secondary battery in which the short circuit-suppressing effect is improved by an insulating layer.

Solution to Problem

As a result of exhaustive studies, the present inventors have found out that when a conventional slurry for an insulating layer is applied onto an electrode active substance layer, a binder of the electrode active substance layer dissolves out and thereby the smoothness of the surface of an obtained insulating layer becomes low. Then, it has been found that by smoothing the interface between the insulating layer after the formation thereof and the electrode active substance layer, the smoothness of the surface of the insulating layer is also increased and the short circuit-suppressing effect of the insulating layer is enhanced; and these findings have led to the completion of the present invention. The gist of the present invention is the following [1] to [14].

[1] An electrode for a lithium ion secondary battery, comprising an electrode active substance layer and an insulating layer provided on a surface of the electrode active substance layer,
wherein the insulating layer comprises an insulative microparticle and a binder for an insulating layer; and
an interface between the insulating layer and the electrode active substance layer has a roughness of 2 $\mu$m or lower as calculated from observation using a scanning electron microscope.

[2] The electrode for a lithium ion secondary battery according to the above [1], wherein the insulating layer has a thickness of 1 to 10 $\mu$m.

[3] The electrode for a lithium ion secondary battery according to the above [1] or [2], wherein the insulating layer has a porous structure.

[4] The electrode for a lithium ion secondary battery according to any one of the above [1] to [3], wherein the binder for an insulating layer comprises a first binder being at least one selected from the group consisting of polyvinylidene fluoride, an acrylic resin and acrylonitrile-butadiene rubber.

[5] The electrode for a lithium ion secondary battery according to any one of the above [1] to [4], wherein the electrode active substance layer is a negative electrode active substance layer.

[6] The electrode for a lithium ion secondary battery according to any one of the above [1] to [5], wherein the electrode active substance layer comprises an electrode active substance and a binder for an electrode.

[7] The electrode for a lithium ion secondary battery according to the above [6], wherein the binder for an electrode comprises a second binder being at least one selected from the group consisting of poly(meth)acrylic acid, carboxymethylcellulose, hydroxyethylcellulose, a sodium salt of carboxymethylcellulose, and polyvinyl alcohol.

[8] The electrode for a lithium ion secondary battery according to any one of the above [1] to [7], wherein the insulating layer has a porosity of 50 to 90%.

[9] A lithium ion secondary battery comprising an electrode for a lithium ion secondary battery according to any one of the above [1] to [8].

[10] The lithium ion secondary battery according to the above [9], comprising a positive electrode and a negative electrode arranged so as to face each other, wherein at least one electrode of the positive electrode and the negative electrode is the electrode for a lithium ion secondary battery having the insulating layer on a surface of the electrode facing the other electrode.

[11] The lithium ion secondary battery according to the above [10], further comprising a separator arranged between the positive electrode and the negative electrode.

[12] A method for producing an electrode for a lithium ion secondary battery, comprising a step of applying a composition for an insulating layer onto a surface of an electrode active substance layer to form an insulating layer thereon,
wherein the composition for an insulating layer comprises an insulative microparticle, a binder for an insulating layer, and a solvent;
the electrode active substance layer comprises an electrode active substance and a binder for an electrode; and
the binder for an insulating layer comprises a first binder having a difference in SP value from the solvent of 6 MPa$^{1/2}$ or smaller, and the binder for an electrode comprises a second binder having a difference in SP value from the solvent of 10 MPa$^{1/2}$ or larger.

[13] The method for producing an electrode for a lithium ion secondary battery according to the above [12], wherein the solvent has an SP value of 20 to 30 MPa$^{1/2}$; the first binder has an SP value of 15 to 25 MPa$^{1/2}$; and the second binder has an SP value of 30 to 50 MPa$^{1/2}$.

[14] The method for producing an electrode for a lithium ion secondary battery according to the above [12] or [13], wherein the solvent is at least one selected from the group consisting of N-methylpyrrolidone, N-ethylpyrrolidone, dimethylacetamide and dimethylformamide.

Advantageous Effects of Invention

According to the present invention, there can be provided an electrode for a lithium ion secondary battery in which the short circuit-suppressing effect is improved by an insulating layer.

Brief Description of Drawing

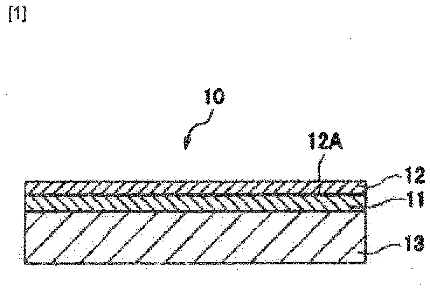

[Fig. 1] Fig. 1 is a schematic cross-sectional view showing one embodiment of an electrode for a lithium ion secondary battery of the present invention.

Description of Embodiments

<Electrode for a lithium ion secondary battery>

Hereinafter, the electrode for a lithium ion secondary battery according to the present invention will be described in detail.

As shown in Fig. 1, an electrode for a lithium ion secondary battery, 10, has an electrode active substance layer 11, and an insulating layer 12 provided on the surface of the electrode active substance layer 11. In the electrode for a lithium ion secondary battery, 10, the electrode active substance layer 11 is usually laminated on an electrode current collector 13.

The electrode active substance layer 11 may be laminated on both surfaces of the electrode current collector 13; and in this case, the insulating layer 12 may be provided on the surface of the each electrode active substance layer 11. When the insulating layers 12 are thus provided in both surfaces of the electrode for a lithium ion secondary battery, 10, even when pluralities of negative electrodes and positive electrodes are laminated to provide a multilayer structure, a short circuit between each positive electrode and negative electrode can effectively be prevented.

In the present invention, the electrode for a lithium ion secondary battery 10, may be either a negative electrode or a positive electrode, and is preferably a negative electrode. Hereinafter, a constitution where the electrode for a lithium ion secondary battery 10 is a negative electrode will be described in detail.

[Insulating layer]

The insulating layer 12 comprises an insulative microparticle and a binder for an insulating layer. The insulating layer 12 is a layer formed by binding the insulative microparticles with the binder for an insulating layer, and has a porous structure.

In the present invention, the interface 12A between the insulating layer 12 and the electrode active substance layer 11 has a roughness of 2 $\mu$m or lower. By setting the roughness of the interface 12A to 2 $\mu$m or lower, the smoothness of the insulating layer surface is secured and the occurrence of a short circuit and the like are prevented. By contrast, by setting the roughness to higher than 2 $\mu$m, the smoothness of the insulating layer 12 becomes insufficient and the electrode active substance layer 11 becomes exposed or otherwise, which makes easy the occurrence of a short circuit, for example, when the separator shrinks by being heated.

From the above viewpoint of suppressing the occurrence of a short circuit, the roughness is preferably 1.5 $\mu$m or lower, and more preferably 1.0 $\mu$m or lower. The lower limit of the roughness is not especially limited, but is, for example, 0.1 $\mu$m. The roughness is, as in a method described in Examples described later, a value calculated from observation of a cross section of the insulating layer 12 and the electrode active substance layer 11 using a scanning electron microscope (SEM).

The thickness of the insulating layer 12 is preferably 1 to 10 $\mu$m. By setting the thickness of the insulating layer 12 to 10 $\mu$m or smaller, the rise in the resistance by the insulating layer 12 is suppressed and the cycle characteristic is improved. Further by setting the thickness to 1 $\mu$m or larger, the coverage of the electrode active substance layer 11 with the insulating layer 12 is increased and the short circuit-suppressing effect is improved. From the viewpoint of these cycle characteristic and short circuit-suppressing effect, the thickness of the insulating layer 12 is more preferably 1.5 to 8.5 $\mu$m, and still more preferably 3 to 7 $\mu$m.

The insulating layer 12, as described above, has a porous structure, and it is preferable that the porosity thereof is 50 to 90%. By setting the porosity to 90% or lower, the coverage of the electrode active substance layer 11 with the insulating layer 12 is increased and the short circuit-suppressing effect is improved. By setting the porosity to 50% or higher, the rise in the resistance by the insulating layer 12 is suppressed and the cycle characteristic is improved. From the viewpoint of the short circuit-suppressing effect and the cycle characteristic, the porosity of the insulating layer is more preferably 60 to 85%, and still more preferably 70 to 80%.

(Insulative microparticle)

The insulative microparticle is not especially limited as long as having insulativity, and may be either of an organic particle and an inorganic particle. Specific examples of the organic particle include particles constituted of organic compounds of crosslinked polymethyl methacrylate, crosslinked styrene-acrylic acid copolymers, crosslinked acrylonitrile resins, polyamide resins, polyimide resins, poly(lithium 2-acrylamido-2-methylpropanesulfonate), polyacetal resins, epoxy resins, polyester resins, phenol resins, melamine resins or the like. The inorganic particle includes particles constituted of inorganic compounds of silicon dioxide, silicon nitride, alumina, boehmite, titania, zirconia, boron nitride, zinc oxide, tin dioxide, niobium oxide ($Nb_2O_5$), tantalum oxide ($Ta_2O_5$), potassium fluoride, lithium fluoride, clay, zeolite, calcium carbonate, or the like. The inorganic particle may be a particle constituted of a well-known composite oxide such as a niobium-tantalum composite oxide or a magnesium-tantalum composite oxide.

The insulative microparticle may be a particle using the materials described above singly, or may be a particle using two or more thereof in combination. Further the insulative microparticle may be a particle containing both of an inorganic compound and an organic compound. The insulative microparticle may be, for example, an inorganic organic composite particle in which the surface of a particle composed of an organic compound is coated with an inorganic oxide.

Among these, inorganic particles are preferable and particularly an alumina particle and a boehmite particle are preferable.

The average particle diameter of the insulative microparticle is not especially limited as long as being smaller than the thickness of the insulating layer, and is, for example, 0.01 to 1 $\mu$m, preferably 0.05 to 0.8 $\mu$m, and more preferably 0.1 to 0.6 $\mu$m. By setting the average particle diameter in the insulating layer to be in these ranges, it becomes easy for the porosity to be regulated in the above range.

Here, the average particle diameter means a particle diameter (D50) at a cumulative volume of 50% in a size distribution of the insulative microparticles as determined by a laser diffraction· scattering method.

One kind of insulative microparticle having an average particle diameter in the above range alone may be used, or a mixture of two kinds of insulative microparticles having different average particle diameters may be used.

The content of the insulative microparticle contained in the insulating layer 12 is, based on the total amount of the insulating layer, preferably 15 to 95% by mass, more preferably 40 to 90% by mass, and still more preferably 60 to 85% by mass. When the content of the insulative microparticle is in the above range, the insulating layer 12 can form a uniform porous structure and is imparted with suitable insulativity.

(Binder for an insulating layer)

The binder for an insulating layer includes fluororesins such as polyvinylidene fluoride (PVDF), polyvinylidene fluoride-hexafluoropropylene copolymers (PVDF-HFP) and polytetrafluoroethylene (PTFE), acrylic resins such as polymethyl acrylate (PMA) and polymethyl methacrylate (PMMA), polyvinyl acetate, polyimide (PI), polyamide (PA), polyvinyl chloride (PVC), polyether nitrile (PEN), polyethylene (PE), polypropylene (PP), polyacrylonitrile (PAN), acrylonitrile-butadiene rubber, styrene butadiene rubber, poly(meth)acrylic acid, carboxymethylcellulose, hydroxyethylcellulose, and polyvinyl alcohol. These binders may be used singly or in combinations of two or more. Carboxymethylcellulose and the like may be used in a form of a salt such as a sodium salt.

It is preferable that the binder for an insulating layer contains a specific binder (hereinafter, referred to also as "first binder"), as described in detail in a production method described later. The first binder, as described later, is a binder having a small difference in SP value from a solvent contained in a composition for an insulating layer. With the insulating layer containing such a first binder, it becomes easy for the roughness of the interface 12A to be low, and the surface of the insulating layer 12 is easily smoothed.

The SP value of the first binder is, specifically, preferably 15 to 25 $MPa^{1/2}$, more preferably 16 to 24 $MPa^{1/2}$, and still more preferably 17 to 23 $MPa^{1/2}$.

As the first binder, among the above binders for an insulating layer, one or two or more selected from the group consisting of polyvinylidene fluoride, an acrylic resin and acrylonitrile-butadiene rubber is exemplified. Among these, polyvinylidene fluoride or an acrylic resin is preferable and polyvinylidene fluoride is more preferable.

Here, the SP value is a solubility parameter value, and is a value $\delta$ determined based on the following expression by Fedors method. When the binder is a metal salt such as a sodium salt, the SP value means an SP value of a compound before forming a salt.

Fedors expression: $\delta = (\sum E / \sum V)^{1/2}$

where $\sum E$ is a cohesive energy; and $\sum V$ is a molar volume.

The binder for an insulating layer may be composed only of the above first binder, or may be composed of the first binder and other binder. The content of the first binder is, based on the total amount of binders (that is, binders for an insulating layer) contained in the insulating layer, preferably 50% by mass or larger, more preferably 75% by mass or larger, and most preferably 100% by mass.

The content of the binder for an insulating layer contained in the insulating layer 12 is, based on the total amount of the insulating layer, preferably 5 to 50% by mass, more preferably 10 to 45% by mass, and still more preferably 15 to 40% by mass. When the content is in the above range, the insulating layer can form a uniform porous structure and can be imparted with suitable insulativity.

The insulating layer may contain other optional component other than the insulative microparticle and the binder for an insulating layer in the range of not impairing the advantageous effect of the present invention. However, based on the total mass of the insulating layer, the total content of the insulative microparticle and the binder for an insulating layer is preferably 85% by mass or higher, and more preferably 90% by mass or higher.

(Electrode active substance layer)

The electrode active substance layer 11 typically contains an electrode active substance and a binder for an electrode. When the electrode is a negative electrode, the electrode active substance is a negative electrode active substance, and the electrode active substance layer 11 is a negative electrode active substance layer.

The negative electrode active substance to be used for the negative electrode active substance layer includes carbon materials such as graphite and hard carbon, complexes of a tin compound, silicon and carbon, and lithium, but among these, carbon material is preferable, and graphite is more preferable. Such negative electrode active substances may be used singly or in combinations of two or more.

The average particle diameter of the electrode active substance is, though not especially limited to, preferably 0.5 to 50 $\mu$m, and more preferably 1 to 30 $\mu$m. The content of the electrode active substance in the electrode active substance layer 11 is, based on the total amount of the electrode active substance layer, preferably 50 to 98.5% by mass, and more preferably 60 to 98% by mass.

The electrode active substance layer 11 may contain a conductive auxiliary agent. The conductive auxiliary agent to be used is a material having a higher conductivity than the above electrode active substance, and specifically includes carbon materials such as Ketjen black, acetylene black, carbon nanotubes and carbon sticks. Such conductive auxiliary agents may be used singly or in combinations of two or more.

When the electrode active substance layer 11 contains the conductive auxiliary agent, the content of the conductive auxiliary agent is, based on the total amount of the electrode active substance layer, preferably 1 to 30% by mass, and more preferably 2 to 25% by mass.

The electrode active substance layer 11 is formed by binding the electrode active substance or the electrode active substance and the conductive auxiliary agent with the binder for an electrode. Specific examples of the binder for an electrode include compounds exemplified as compounds usable for the binder for an insulating layer. Such binders to be used for the electrode active substance layer may be used singly or in combinations of two or more.

The content of the binder for an electrode in the electrode active substance layer 11 is, based on the total amount of the electrode active substance layer, preferably 1.5 to 40% by mass, and more preferably 2.0 to 25% by mass.

It is preferable that the binder for an electrode contains a specific binder (hereinafter, referred to also as "second binder"), as described in detail in a production method described later. The second binder, as described later, is a binder having a large difference in SP value from a solvent contained in a composition for an insulating layer. With the electrode active substance layer containing such a second binder, the interface between the electrode active substance layer and the insulating layer can be smoothed, and the roughness of the interface 12A is easily set to be in the above range.

The SP value of the second binder is preferably 30 to 50 MPa$^{1/2}$, more preferably 32 to 42 MPa$^{1/2}$, and still more preferably 33 to 39 MPa$^{1/2}$.

Specific examples of the second binder include one or two or more selected from the group consisting of poly(meth)acrylic acid, carboxymethylcellulose, hydroxyethylcellulose, a sodium salt of carboxymethylcellulose, and polyvinyl alcohol. Among these, preferable are carboxymethylcellulose, hydroxyethylcellulose or a sodium salt of carboxymethylcellulose, and more preferable are carboxymethylcellulose or a sodium salt thereof.

The binder for an electrode may contain, in addition to the second binder, binder other than the second binder (referred to also as "other binder"). Specific examples of the other binder include styrene butadiene rubber, and acrylic resins such as polymethyl methacrylate and polymethyl acrylate; among these, styrene butadiene rubber is more preferable. The concurrent use of the second binder and the other binder enables the binder for an electrode to suitably hold the electrode active substance and the optionally blended conductive auxiliary agent. The other binder has a small difference in SP value from a solvent in a composition for an insulating layer, as described later.

The content of the second binder is, based on the total amount of binders contained in the electrode active substance layer (that is, the binder for an electrode), preferably 30% by mass or higher, and more preferably 40% by mass or higher. Then, the upper limit value thereof is 100% by mass, and is preferably 70% by mass.

The content of the other binder is, based on the total amount of the binder for an electrode, preferably 70% by mass or lower, and more preferably 60% by mass or lower. Then, the lower limit value thereof is 0% by mass, and is preferably 30% by mass.

The thickness of the electrode active substance layer 11 is not especially limited, but is, per one surface of the electrode current collector 13, preferably 10 to 100 $\mu$m, and more preferably 20 to 80 $\mu$m.

The electrode active substance layer 11 may contain other optional component other than the electrode active substance, the conductive auxiliary agent and the binder for an electrode in the range of not impairing the advantageous effect of the present invention. Here, based on the total mass of the electrode active substance layer, the total content of the electrode active substance, the conductive auxiliary agent and the binder for an electrode is preferably 90% by mass or higher, and more preferably 95% by mass or higher.

(Electrode current collector)

When the electrode is a negative electrode, the electrode current collector 13 is a negative electrode current collector. Examples of the material constituting the negative electrode current collector (electrode current collector) include metals having conductivity such as copper, aluminum, titanium, nickel and stainless steel; among these, aluminum or copper are preferable, and copper is more preferable. The electrode current collector 13 is usually composed of a metal foil; and the thickness thereof is not especially limited, but is preferably 1 to 50 $\mu$m.

<Method for producing an electrode for a lithium ion secondary battery>

Then, one embodiment of a method for producing an electrode for a lithium ion secondary battery will be described in detail. In the method for producing an electrode for a lithium ion secondary battery according to the present invention, first, an electrode active substance layer is formed; and on the surface of the electrode active substance layer, a composition for an insulating layer is applied to thereby form an insulating layer. In the following description, there will be described a case where the electrode active substance layer is a negative electrode active substance layer; the insulating layer contains a first binder as a binder for an insulating layer; and the electrode active substance layer contains a second binder as a binder for an electrode.

(Formation of the electrode active substance layer)

In the formation of the electrode active substance layer, first, a composition for an electrode active substance layer containing an electrode active substance (negative electrode active substance), a second binder as a binder for an electrode, and a solvent is prepared. The composition for an electrode active substance layer may contain other binder other than the second binder as the binder for an electrode. The composition for an electrode active substance layer may further contain other components such as a conductive auxiliary agent to be blended according to needs. The negative electrode active substance, the second binder, the other binder, the conductive auxiliary agent and the like are as described in the above. The composition for an electrode active substance layer is a slurry.

As the solvent in the composition for an electrode active substance layer, preferably, water is used. By using water, the above second binder can easily be dissolved in the composition for an electrode active substance layer. Then, the other binder may be blended in a form of emulsion in water.

The solid content concentration of the composition for an electrode active substance layer is preferably 5 to 75% by mass, and more preferably 20 to 65% by mass.

The electrode active substance layer may be formed by using the above composition for an electrode active substance layer, by a well-known method, and can be formed, for example, by applying and drying the above composition for an electrode active substance layer onto the electrode current collector.

Alternatively, the electrode active substance layer may be formed by applying and drying the composition for an electrode active substance layer onto a base material other than the electrode current collector. The base material other than the electrode current collector includes well-known release sheets. The electrode active substance layer formed on the base material is peeled off the base material, preferably after the formation of the insulating layer, and transferred on the electrode current collector.

The electrode active substance layer formed on the electrode current collector or the base material is preferably pressed. By pressing it, the electrode density can be increased. The pressing may be carried out by a roll press or the like.

(Formation of the insulating layer)

A composition for an insulating layer to be used for the formation of the insulating layer comprises an insulative microparticle, a first binder as a binder for an insulating layer, and a solvent. The composition for an insulating layer may contain binder other than the first binder as the binder for an insulating layer. The composition for an insulating layer may further contain other optional components to be blended according to needs. The details of the insulative microparticle, the binder for an insulating layer, and the like are as described in the above. The composition for an insulating layer becomes a slurry.

In the present production method, the first binder has a difference in SP value from the solvent in the composition for an insulating layer of 6 $MPa^{1/2}$ or smaller. Further the above second binder has a difference in SP value from the solvent in the composition for an insulating layer of 10 $MPa^{1/2}$ or larger. By thus regulating the SP values, the solvent in the composition for an insulating layer becomes low in the affinity for the second binder compared with for the first binder; in the formation of the insulating layer, the second binder is hardly dissolved in the solvent; thereby, after the formation of the insulating layer, the smoothness of the interface between the insulating layer and the electrode active substance layer is retained. Therefore, the roughness of the interface 12A becomes low, and the short circuit-suppressing effect is enhanced. Further when the composition for an insulating layer is applied, since the first binder is homogeneously dissolved in the solvent and the uniformity of a coated film is secured, also the surface of the insulating layer easily becomes smooth.

By contrast, when the difference in SP value between the solvent and the first binder in the composition for an insulating layer becomes larger than 6 $MPa^{1/2}$, or the difference in SP value between the solvent and the second binder becomes smaller than 10 $MPa^{1/2}$, the roughness of the interface 12A does not become sufficiently low, lowering the short circuit-suppressing effect.

The difference in SP value between the solvent and the first binder in the composition for an insulating layer is, from the viewpoint of lowering the roughness of the interface 12A and enhancing the short circuit-suppressing effect, preferably 5.5 $MPa^{1/2}$ or smaller, and more preferably 5 $MPa^{1/2}$ or smaller.

Further the difference in SP value between the solvent and the first binder in the composition for an insulating layer is preferably 1 $MPa^{1/2}$ or larger, more preferably 2.5 $MPa^{1/2}$ or larger, and still more preferably 3.5 $MPa^{1/2}$ or larger. By thus setting the difference in SP value between the solvent and the first binder to a certain value or larger, the decrease in the viscosity due to the improvement of the affinity of the first binder for the solvent is suppressed to the least. The decrease in the porosity of the insulating layer can also be suppressed.

In the composition for an insulating layer as described above, however, other than the first binder, binder having a difference in SP value from the solvent in the composition for an insulating layer of larger than 6 MPa$^{1/2}$ may be contained as the binder for an insulating layer.

The difference in SP value between the solvent in the composition for an insulating layer and the second binder contained in the electrode active substance layer is, from the viewpoint of lowering the affinity therefor and more enhancing the short circuit-suppressing effect, preferably 11 MPa$^{1/2}$ or larger, and more preferably 12 MPa$^{1/2}$ or larger. The difference in SP value between the solvent in the composition for an insulating layer and the second binder is not especially limited, but is usually 20 MPa$^{1/2}$ or lower, and preferably 15 MPa$^{1/2}$ or lower.

Then, the electrode active substance layer, as described above, may contain other binder other than the second binder. The other binder have a difference in SP value from the solvent in the composition for an insulating layer of smaller than 10 MPa$^{1/2}$.

The SP value of the solvent in the composition for an insulating layer is preferably 20 to 30 MPa$^{1/2}$. By using the solvent having an SP value in this range, it becomes easy for the differences in SP value from the first and second binders to be regulated in the above ranges. The SP value of the solvent in the composition for an insulating layer is preferably 21 to 28 MPa$^{1/2}$, and more preferably 22 to 25 MPa$^{1/2}$.

Specific examples of the solvent in the composition for an insulating layer include one or two or more selected from the group consisting of N-methylpyrrolidone, N-ethylpyrrolidone, dimethylacetamide and dimethylformamide. Among these, N-methylpyrrolidone is especially preferable.

The solid content concentration of the composition for an insulating layer is preferably 5 to 75% by mass, and more preferably 15 to 50% by mass. The viscosity of the composition for an insulating layer is preferably 1,000 to 3,000 mPa·s, and more preferably 1,700 to 2,300 mPa·s. By setting the viscosity and the solid content concentration to be in the above ranges, it becomes easy for the insulating layer having a predetermined thickness and having a low roughness of the interface 12A to be formed. Here, the viscosity is a viscosity measured by a B-type viscometer under the condition of 60 rpm and 25°C.

The insulating layer can be formed by applying and drying the composition for an insulating layer onto an electrode current collector. A method of applying the composition for an insulating layer onto the surface of the electrode active substance layer is not especially limited, and examples thereof include a dip coat method, a spray coat method, a roll coat method, a doctor blade method, a bar coat method, a gravure coat method and a screen printing method. Among these, from the viewpoint of applying the insulating layer uniformly and thinning the insulating layer and lowering the above roughness, a bar coat method or a gravure coat method is preferable.

The drying temperature is not especially limited as long as being capable of removing the above solvent, but is, for example, 40 to 120°C, and preferably 50 to 90°C. The drying time is not especially limited, and is, for example, 30 sec to 10 min.

In the above description, the case where the electrode for a lithium ion secondary battery according to the present invention is a negative electrode has been described as an example, but the electrode for a lithium ion secondary battery may be a positive electrode. In the case of a positive electrode, the electrode active substance layer is a positive electrode active substance layer, and the electrode active substance is a positive electrode active substance.

The positive electrode active substance includes metal acid lithium compounds. Examples of the metal acid lithium compounds include lithium cobaltate (LiCoO$_2$), lithium nickelate (LiNiO$_2$) and lithium manganate (LiMn$_2$O$_4$). Further an olivine-type iron lithium phosphate (LiFePO$_4$) or the like may be used. Further, a compound in which plurality of metals other than lithium are utilized may be used, and NCM (nickel, cobalt, manganese)-based oxides, NCA (nickel, cobalt, aluminum)-based oxides and the like, called ternary oxides, may be used.

Then, the electrode current collector is a positive electrode current collector. The material to become the positive electrode current collector is the same as the compounds to be used for the above negative electrode current collector, and preferably, aluminum or copper is used, and more preferably, aluminum is used.

Since other constitutions where the electrode for a lithium ion secondary battery is a positive electrode are the same as the constitution where it is a negative electrode, the description of the other constitutions will be omitted.

<Lithium ion secondary battery>

The lithium ion secondary battery according to the present invention has the above electrode for a lithium ion secondary battery having the insulating layer. Specifically, the lithium ion secondary battery according to the present invention comprises a positive electrode and a negative electrode arranged so as to face each other, wherein at least one electrode of the negative electrode and the positive electrode is the above electrode for a lithium ion secondary battery having the insulating layer. In the electrode (negative electrode or positive electrode) for a lithium ion secondary battery, the insulating layer may be provided on the surface of the electrode facing the other electrode (positive electrode or negative electrode).

The lithium ion secondary battery according to the present invention preferably further comprises a separator arranged between the positive electrode and the negative electrode. By being provided with the separator, the short circuit between the positive electrode and the negative electrode is more effectively prevented. The separator may further hold an electrolyte described later. The insulating layer provided on the positive electrode or the negative electrode may contact with the separator, or may not, but contacting is preferable.

The separator includes porous polymer membranes, nonwoven fabrics and glass fibers; among these, porous polymer membranes are preferable. Examples of the porous polymer membranes include olefinic porous films. The separator thermally shrinks or so in some cases by being heated by heat generated in driving of the lithium ion secondary battery, but even in such thermal shrinkage, providing the insulating layer makes it easy for the short circuit to be suppressed.

Further in the lithium ion secondary battery according to the present invention, no separator may be provided. Even when no separator is provided, the insulativity between the negative electrode and the positive electrode may be secured by the insulating layer provided at least on either the negative electrode or the positive electrode.

The lithium ion secondary battery may be of a multilayer structure in which pluralities of negative electrodes and positive electrodes are laminated respectively. In this case, a negative electrode and a positive electrode are provided alternately along the lamination direction. In the case of using separators, a separator may be arranged between each negative electrode and each positive electrode.

In the lithium ion secondary battery, the above negative electrode and positive electrode, or negative electrode, positive electrode and separator are housed in a battery cell. The battery cell may be of any of rectangular type, cylindrical type or laminate type.

The lithium ion secondary battery comprises an electrolyte. The electrolyte is not especially limited, and a well-known electrolyte used in lithium ion secondary batteries may be used. As the electrolyte, for example, an electrolyte solution is used.

Examples of the electrolyte solution include electrolyte solutions containing an organic solvent and an electrolyte salt. Examples of the organic solvent include polar solvents such as ethylene carbonate, propylene carbonate, dimethyl carbonate, $\gamma$-butyrolactone, sulfolane, dimethyl sulfoxide, acetonitrile, dimethylformamide, dimethylacetamide, 1,2-dimethoxyethane, 1,2-diethoxyethane, tetrahydrofuran, 2-methyltetrahydrofuran, dioxolane and methyl acetate, or mixtures of two or more of these solvents. The electrolyte salts include salts containing lithium such as $LiClO_4$, $LiPF_6$, $LiBF_4$, $LiAsF_6$, $LiSbF_6$, $LiCF_3CO_2$, $LiN(SO_2CF_3)_2$, $LiN(SO_2CF_2CF_3)_2$, $LiN(COCF_3)_2$, $LiN(COCF_2CF_3)_2$, and lithium bis(oxalate)borate ($LiB(C_2O_4)_2$). The electrolyte salts further include complexes of organic acid lithium salt-boron trifluoride complexes, complex hydrides such as $LiBH_4$, and the like. These salts or complexes may be used singly or as a mixture of two or more.

The electrolyte may be a gelatinous electrolyte containing the above electrolyte solution and further a polymer compound. Examples of the polymer compound include fluoropolymers such as polyvinylidene fluoride, and polyacrylic polymers such as polymethyl (meth)acrylate. The gelatinous electrolyte may also be used as a separator.

The arrangement of the electrolyte suffices as long as the electrolyte is arranged between the negative electrode and the positive electrode; and the electrolyte is, for example, filled in a battery cell in which the above negative electrode and positive electrode, or negative electrode, positive electrode and separator are housed. Alternatively, the electrolyte, for example, may be applied onto the negative electrode or the positive electrode, and thus, arranged between the negative electrode and the positive electrode.

Examples

Hereinafter, the present invention will be described in more detail by way of Examples, but the present invention is not any more limited to these Examples.

Obtained electrodes for a lithium ion secondary battery were evaluated by the following evaluation methods.

(Short circuit-suppressing effect)

Cells fabricated in Examples and Comparative Examples were each charged at a constant current of 8 A to 4.2 V, and thereafter, at the constant voltage until the current value became 0.8 A. Thereafter, the cells were put in a temperature-controllable thermostatic chamber, whose temperature was set at 130°C. After the temperature reached 130°C, the cells were left therein for 1 hour. The voltage, surface temperature and appearance change of the cells during the leaving time were determined and evaluated in the following classification.

A: The surface temperature was 140°C or lower, and almost no heat generation by a short circuit occurred.
B: Heat generation occurred so that the surface temperature became higher than 140°C, but no leakage of the electrolyte solution occurred and the pouch cell was not torn open.

C: Leakage of the electrolyte solution occurred, or the pouch cell was torn open.
D: Smoke generation or inflammation occurred.

(Cycle characteristic)

Cells fabricated in Examples and Comparative Examples were each repeatedly charged and discharged under the following condition.
Charge: at a constant current of 8 A to 4.2 V, and thereafter, at the constant voltage until the current value became 0.8 A
Discharge: at a constant current of 8 A to an end voltage of 3.0 V
Number of repetitions: 3,000 cycles

The proportion of a discharge capacity after 3,000 cycles of the charge and discharge to a discharge capacity in the first cycle was taken as a capacity retention ratio, and the cycle characteristic was evaluated as follows.

A: 80% $\leq$ the capacity retention ratio
B: 70% $\leq$ the capacity retention ratio < 80%
C: 60% $\leq$ the capacity retention ratio < 70%
D: the capacity retention ratio < 60%

The physical properties of the obtained electrodes for a lithium ion secondary battery were measured by the following methods.

(Roughness)

A cross section of an electrode for a lithium ion secondary battery with an insulating layer formed was observed using a SEM (scanning electron microscope) at a magnification of 1,500, and an image 80 $\mu$m in width $\times$ 60 $\mu$m in thickness nearly along the width direction of the electrode was acquired. In the acquired image, 5 points, protruding into the insulating layer side, of the electrode active substance layer present at the interface with the insulating layer were randomly selected, and the distances of the points from the electrode current collector were measured. Similarly, 5 points, being depressed inward, of the electrode active substance layer were randomly selected, and the distances of the points from the electrode current collector were measured. The distances were measured in the line segment length measuring mode by using image analysis software "Image J". A value obtained by subtracting an average distance of the 5 points being depressed inward of the electrode active substance layer from an average distance of the 5 points protruding into the insulating layer side, was taken as a roughness.

(Thickness of an insulating layer)

The thickness of an insulating layer was calculated from the amount of the insulating layer applied and the porosity. Electrodes before the formation of an insulating layer and electrodes after the formation of an insulating layer obtained in Examples and Comparative Examples were provided. The electrodes before and after the formation of an insulating layer were cut out into a size of 5 cm $\times$ 5 cm, and their weights were measured by using a balance. Thereafter, the amount applied was calculated by the following calculation.

$$\text{Amount applied } [\text{g/m}^2] = (\text{electrode weight after the formation of an insulating layer } [\text{g}] - \text{electrode weight before the formation of the insulating layer } [\text{g}]) / (25/10{,}000 \; [\text{m}^2])$$

By using a value of the density of the insulating layer separately calculated in measurement of the porosity, the thickness was calculated by the following expression.

$$\text{Thickness } [\mu\text{m}] = \text{amount of the insulating layer applied } [\text{g/m}^2] / \text{the density } [\text{g/m}^3]$$

(Thickness of an electrode active substance layer)

The thickness of an electrode active substance layer was obtained by measuring the thickness of an electrode fabricated in each Example by using "MF-101", manufactured by Nikon Corp.

(Porosity)

Coating with a composition for an insulating layer followed by drying was conducted under the same conditions as in each of Examples and Comparative Examples, except for coating an aluminum foil having a thickness of 15 $\mu$m with the composition so as to provide a thickness of 4 $\mu$m, to thereby obtain an aluminum foil with an insulating layer. The thickness was measured by a thickness gauge (trade name: "Digimicro MF-501", manufactured by Nikon Corp.) and the thickness of the insulating layer was calculated.

The weight of the aluminum foil with an insulating layer cut out into a size of 100 cm$^2$ was measured; and a weight of an aluminum foil having the same area was subtracted from the weight and a weight per unit area of the insulating layer was calculated. By dividing the weight per unit area of the insulating layer by the thickness of the insulating layer, the density of the insulating layer was calculated, and the porosity was obtained by the following calculation expression.

$$\text{Porosity [\%]} = 100 - (\text{the density of the insulating layer}) / (\text{a specific gravity of the material of the insulating layer}) \times 100$$

[Example 1]

(Fabrication of a positive electrode)

100 parts by mass of an NCA-based oxide (average particle diameter: 10 $\mu$m) as a positive electrode active substance, 2 parts by mass of an acetylene black as a conductive auxiliary agent, 2 parts by mass of a polyvinylidene fluoride (PVdF, SP value: 19.1 MPa$^{1/2}$) as a binder for an electrode, and N-methylpyrrolidone (NMP, SP value: 23.1 MPa$^{1/2}$) as a solvent were mixed to thereby obtain a slurry for a positive electrode active substance layer whose solid content concentration had been regulated at 60% by mass. The slurry for a positive electrode active substance layer was applied onto both surfaces of an aluminum foil having a thickness of 15 $\mu$m as a positive electrode current collector, predried and thereafter vacuum dried at 120°C. Thereafter, the positive electrode current collector having the slurry for a positive electrode active substance layer applied onto both the surfaces was pressed at a line pressure of 400 kN/m by a roller, and further punched out into a rectangle having an electrode size of 100 mm × 200 mm to thereby provide a positive electrode having a positive electrode active substance layer on both surfaces. In the size, the area where the positive electrode active substance was applied was 100 mm × 180 mm. Here, the thickness of the positive electrode active substance layer formed on both the surfaces was 50 $\mu$m per one surface.

(Fabrication of a negative electrode)

100 parts by mass of a graphite (average particle diameter: 10 $\mu$m) as a negative electrode active substance, 1.5 parts by mass of a sodium salt of a carboxymethylcellulose (CMC, SP value: 35.3 MPa$^{1/2}$) as a second binder, 1.5 parts by mass of a styrene butadiene rubber (SBR, SP value: 19.1 MPa$^{1/2}$) as other binder, and water as a solvent were mixed to thereby obtain a slurry for a negative electrode active substance layer whose solid content had been regulated at 50% by mass. The slurry for a negative electrode active substance layer was applied onto both surfaces of a copper foil having a thickness of 12 $\mu$m as a negative electrode current collector, and vacuum dried at 100°C. Thereafter, the negative electrode current collector having the slurry for a negative electrode active substance layer applied onto both the surfaces was pressed at a line pressure of 300 kN/m by a roller, and further punched out into a rectangle having an electrode size of 110 mm × 210 mm to thereby provide a negative electrode having a negative electrode active substance layer on both surfaces. In the size, the area where the negative electrode active substance was applied was 110 mm × 190 mm. Here, the thickness of the negative electrode active substance layer formed on both the surfaces was 50 $\mu$m per one surface.

(Preparation of an electrolyte solution)

LiPF$_6$ as an electrolyte salt was dissolved so as to become 1 mol/l in a mixed solvent of ethylene carbonate (EC) and diethyl carbonate (DEC) in a volume ratio of 3 : 7 (EC : DEC), to thereby prepare an electrolyte solution.

(Formation of an insulating layer)

Alumina particles (manufactured by Nippon Light Metal Co., Ltd., product name: AHP200, average particle diameter: 0.4 $\mu$m) as insulative microparticles were mixed and dispersed in a polyvinylidene fluoride solution (manufactured by Kureha Corp., product name: L#1710, 10-mass% solution, solvent: NMP) under a moderate shearing force applied so that in terms of solid content, the alumina particles became 100 parts by mass and the polyvinylidene fluoride (first binder, SP value: 19.1 MPa$^{1/2}$) became 22 parts by mass, to thereby obtain a slurry.

NMP (SP value: 23.1 MPa$^{1/2}$) was further added to the slurry so that the solid content concentration became 30% by mass, and mildly stirred for 30 min by a stirrer to thereby obtain a slurry for an insulating layer. The viscosity of the slurry for an insulating layer was 2,000 mPa·s. Here, the viscosity was measured by a B-type viscometer under the condition of 60 rpm and 25°C.

The slurry for an insulating layer was applied onto the surface of one negative electrode active substance layer of the negative electrode by a bar coater, and the coated film was dried at 60°C for 10 min to thereby form an insulating layer on the surface of the one negative electrode active substance layer; and then the other-side negative electrode active substance layer was similarly coated with the slurry to thereby obtain a negative electrode having an insulating layer on both the surfaces.

(Production of a battery)

10 sheets of the negative electrode having insulating layers, obtained in the above, 9 sheets of the positive electrode, obtained in the above, and 18 sheets of a separator were laminated to thereby obtain a laminate. Here, the negative electrode and the positive electrode were alternately arranged and the separator was arranged between each negative electrode and positive electrode. The separator used was a polyethylene porous film.

End parts of exposed parts of the positive electrode current collectors of the positive electrodes were collectively fused and joined, and a terminal tab sticking outward was connected. Similarly, end parts of exposed parts of the negative electrode current collectors of the negative electrodes were collectively fused and joined, and a terminal tab sticking outward was connected.

Then, the obtained laminate was interposed between aluminum laminate films; the terminal tabs were caused to stick outward; and three sides were sealed by lamination. From one side left unsealed, the electrolyte solution obtained in the above was injected, and by vacuum sealing the one side, a laminate-type cell was produced.

[Example 2]

The same procedure as in Example 1 was carried out, except for setting the thickness of the insulating layer formed on the negative electrode to 6 $\mu$m.

[Example 3]

The same procedure as in Example 1 was carried out, except for, in blending of the slurry for an insulating layer, altering alumina to be used to 50 parts by mass of "AHP200" (product name, manufactured by Nippon Light Metal Co., Ltd., average particle diameter: 0.4 $\mu$m) and 50 parts by mass of "AKP-3000" (product name, manufactured by Sumitomo Chemical Co., Ltd., average particle diameter: 0.3 $\mu$m). The viscosity of the slurry for an insulating layer was 2,200 mPa·s.

[Example 4]

The same procedure as in Example 1 was carried out, except for, in fabrication of the negative electrode, using a hydroxyethylcellulose (HEC, SP value: 35.6 MPa$^{1/2}$) in place of the sodium salt of the carboxymethylcellulose.

[Example 5]

The same procedure as in Example 1 was carried out, except for using a slurry for an insulating layer in which: the first binder was altered to a polymethyl methacrylate (PMMA, SP value: 21.1 MPa$^{1/2}$); in terms of solid content, the alumina particles became 100 parts by mass and the polymethyl methacrylate became 22 parts by mass; and NMP was caused to be contained as the solvent so that the solid content concentration became 30% by mass. The viscosity of the slurry for an insulating layer was 1,800 mPa·s.

[Example 6]

In fabrication of a slurry for an insulating layer, the solvent was altered to dimethylacetamide (DMAC, SP value: 22.1 MPa$^{1/2}$); and a slurry for an insulating layer was prepared so that: in terms of solid content, the alumina particles became 100 parts by mass and the polyvinylidene fluoride became 22 parts by mass; and the solid content concentration became 30% by mass. The viscosity of the slurry for an insulating layer was 1,900 mPa·s.

[Example 7]

The same procedure as in Example 1 was carried out, except for using a boehmite (average particle diameter: 0.5 μm) in place of the alumina in fabrication of the slurry for an insulating layer. The viscosity of the slurry for an insulating layer was 1,900 mPa·s.

[Comparative Example 1]

The same procedure as in Example 1 was carried out, except for altering the fabrication of a negative electrode active substance layer and the fabrication of an insulating layer to the following.

(Fabrication of a negative electrode active substance layer)

A graphite (average particle diameter: 10 μm), a polyvinylidene fluoride solution (manufactured by Kureha Corp., product name: L#1710, 10-mass% solution, solvent: NMP), and NMP were mixed so that: in terms of solid content, the graphite became 100 parts by mass, and the polyvinylidene fluoride became 1.5 parts by mass; and the solid content concentration became 50% by mass, to thereby obtain a slurry for a negative electrode active substance layer. The slurry for a negative electrode active substance layer was applied onto both surfaces of a copper foil having a thickness of 12 μm as a negative electrode current collector, and vacuum dried at 130°C. Then, the resultant was pressed at a line pressure of 300 kN/m by a roller, and further punched out into a rectangle having an electrode size of 110 mm × 210 mm to thereby obtain a negative electrode having a negative electrode active substance layer on both surfaces. In the size, the area where the negative electrode active substance was applied was 110 mm × 190 mm. Here, the thickness of the negative electrode active substance layer formed on both the surfaces was 50 μm per one surface.

(Formation of an insulating layer)

Two kinds of alumina particles (AHP200 (manufactured by Nippon Light Metal Co., Ltd., average particle diameter: 0.4 μm) and C500 (manufactured by Nippon Light Metal Co., Ltd., average particle diameter: 1 μm)) as insulative microparticles were added to and mixed and dispersed under a moderate shearing force applied in a polyvinylidene fluoride solution (manufactured by Kureha Corp., product name: L#1710, 10-mass% solution, solvent: NMP) so that: AHP200 and C500 each became 50 parts by mass; and in terms of solid content, the polyvinylidene fluoride became 22 parts by mass with respect to 100 parts by mass of the aluminas, to thereby obtain a slurry.
NMP was further added to the slurry so that the solid content concentration became 30% by mass, mildly stirred for 30 min by a stirrer, and thereafter, further stirred by a rotating and revolving mixer in a vessel having zirconia beads therein, to thereby obtain a slurry for an insulating layer. Thereafter, an insulating layer was formed on each negative electrode active substance layer as in Example 1 to thereby obtain a negative electrode having an insulating layer on both surfaces.

[Comparative Example 2]

The same procedure as in Example 1 was carried out, except for forming the insulating layer on both surfaces of the positive electrode in place of on both surfaces of the negative electrode.

[Comparative Example 3]

The same procedure as in Example 1 was carried out, except for altering the fabrication of a negative electrode active substance layer to the following.

(Fabrication of a negative electrode active substance layer)

A graphite (average particle diameter: 10 μm), a polyvinylidene fluoride solution (manufactured by Kureha Corp., product name: L#1710, 10-mass% solution, solvent: NMP), and NMP were mixed so that: in terms of solid content, the graphite became 100 parts by mass, and the polyvinylidene fluoride became 1.5 parts by mass; and the solid content concentration became 50% by mass, to thereby obtain a slurry for a negative electrode active substance layer. The slurry for a negative electrode active substance layer was applied onto both surfaces of a copper foil having a thickness of 12 $\mu$m, and vacuum dried at 130°C. Then, the resultant was pressed at a line pressure of 300 kN/m by a roller, and further punched out into a rectangle having an electrode size of 110 mm × 210 mm to thereby obtain a negative electrode having a negative electrode active substance layer on both surfaces. In the size, the area where the negative electrode active substance was applied was 110 mm × 190 mm. Here, the thickness of the negative electrode active substance layer formed on both the surfaces was 50 $\mu$m per one surface.

[Table 1]

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Insulating layer | Insulative microparticle-1 | kind | alumina | alumina | alumina | alumina | alumina | alumina | boehmite | alumina | alumina | alumina |
| | | D50 ($\mu$m) | 0.4 | 0.4 | 0.4 | 0.4 | 0.4 | 0.4 | 0.5 | 0.4 | 0.4 | 0.4 |
| | | parts by mass | 100 | 100 | 50 | 100 | 100 | 100 | 100 | 50 | 100 | 100 |
| | Insulative microparticle-2 | kind | | | alumina | | | | | alumina | | |
| | | D50 ($\mu$m) | | | 0.3 | | | | | 1 | | |
| | | parts by mass | | | 50 | | | | | 50 | | |
| | First binder | kind | PVdF | PVdF | PVdF | PVdF | PMMA | PVdF | PVdF | PVdF | PVdF | PVdF |
| | | SP value ($\sqrt{}$ (MPa) | 19.1 | 19.1 | 19.1 | 19.1 | 21.1 | 19.1 | 19.1 | 19.1 | 19.1 | 19.1 |
| | | parts by mass | 22 | 30 | 22 | 22 | 22 | 22 | 22 | 22 | 22 | 22 |
| | Solvent | kind | NMP | NMP | NMP | NMP | NMP | DMAC | NMP | NMP | NMP | NMP |
| | | SP value ($\sqrt{}$ (MPa) | 23.1 | 23.1 | 23.1 | 23.1 | 23.1 | 22.1 | 23.1 | 23.1 | 23.1 | 23.1 |
| | First binder vs. Solvent for insulating layer | SP value difference ($\sqrt{}$(MPa)) | 4 | 4 | 4 | 4 | 2 | 3 | 4 | 4 | 4 | 4 |
| | Physical properties | thickness ($\mu$m) | 4 | 6 | 4 | 4 | 4 | 4 | 4 | 4 | 4 | 4 |
| | | roughness ($\mu$m) | 1 | 0.5 | 0.8 | 0.9 | 0.8 | 0.9 | 1 | 3 | 3 | 2.5 |
| | | porosity (%) | 78 | 79 | 60 | 78 | 55 | 65 | 78 | 45 | 78 | 78 |

(continued)

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Electrode active substance layer | Active substance | kind | graphite | graphite | graphite | graphite | graphite | graphite | graphite | graphite | NMC | graphite |
| | Second binder | kind | CMC | CMC | CMC | HEC | CMC | CMC | CMC | PVdF | PVdF | PVdF |
| | | SP value ($\sqrt{}$ (MPa) | 35.3 | 35.3 | 35.3 | 35.6 | 35.3 | 35.3 | 35.3 | 19.1 | 19.1 | 19.1 |
| | Other binder | kind | SBR | SBR | SBR | SBR | SBR | SBR | SBR | none | none | none |
| | | SP value ($\sqrt{}$ (MPa) | 19.1 | 19.1 | 19.1 | 19.1 | 19.1 | 19.1 | 19.1 | none | none | none |
| | Solvent | kind | water | water | water | water | water | water | water | NMP | NMP | NMP |
| | Second binder vs. Solvent for insulating layer | SP value difference ($\sqrt{}$(MPa) | 12.2 | 12.2 | 12.2 | 12.5 | 12.2 | 13.2 | 12.2 | 4 | 4 | 4 |
| Evaluation results | Short circuit suppression | | A | A | A | A | A | A | A | D | D | D |
| | Cycle characteristic | | A | A | B | A | C | B | A | D | A | A |

As indicated by the above Examples 1 to 7, by setting the roughness of the interface between an insulating layer and an electrode active substance layer to 2 $\mu$m or lower, the short circuit-suppressing effect was excellent. By contrast, in Comparative Examples 1 to 3, since the roughness of the interface was higher than 2 $\mu$m, the short circuit-suppressing effect was insufficient.

Reference Signs List

10      ELECTRODE FOR LITHIUM ION SECONDARY BATTERY
11      ELECTRODE ACTIVE SUBSTANCE LAYER
12      INSULATING LAYER
12A     INTERFACE OF INSULATING LAYER
13      ELECTRODE CURRENT COLLECTOR

**Claims**

1.  An electrode for a lithium ion secondary battery, comprising: an electrode active substance layer and an insulating layer provided on a surface of the electrode active substance layer,
    wherein the insulating layer comprises an insulative microparticle and a binder for an insulating layer; and
    an interface between the insulating layer and the electrode active substance layer has a roughness of 2 $\mu$m or lower as calculated from observation using a scanning electron microscope.

2.  The electrode for a lithium ion secondary battery according to claim 1, wherein the insulating layer has a thickness of 1 to 10 $\mu$m.

3.  The electrode for a lithium ion secondary battery according to claim 1 or 2, wherein the insulating layer has a porous structure.

4.  The electrode for a lithium ion secondary battery according to any one of claims 1 to 3, wherein the binder for an insulating layer comprises a first binder being at least one selected from the group consisting of polyvinylidene fluoride, an acrylic resin and acrylonitrile-butadiene rubber.

5.  The electrode for a lithium ion secondary battery according to any one of claims 1 to 4, wherein the electrode active substance layer is a negative electrode active substance layer.

6.  The electrode for a lithium ion secondary battery according to any one of claims 1 to 5, wherein the electrode active substance layer comprises an electrode active substance and a binder for an electrode.

7.  The electrode for a lithium ion secondary battery according to claim 6, wherein the binder for an electrode comprises a second binder being at least one selected from the group consisting of poly(meth)acrylic acid, carboxymethylcellulose, hydroxyethylcellulose, a sodium salt of carboxymethylcellulose, and polyvinyl alcohol.

8.  The electrode for a lithium ion secondary battery according to any one of claims 1 to 7, wherein the insulating layer has a porosity of 50 to 90%.

9.  A lithium ion secondary battery comprising an electrode for a lithium ion secondary battery according to any one of claims 1 to 8.

10. The lithium ion secondary battery according to claim 9, comprising a positive electrode and a negative electrode arranged so as to face each other, wherein at least one electrode of the positive electrode and the negative electrode has the insulating layer provided on a surface of the electrode facing the other electrode.

11. The lithium ion secondary battery according to claim 10, further comprising a separator arranged between the positive electrode and the negative electrode.

12. A method for producing an electrode for a lithium ion secondary battery, comprising a step of applying a composition for an insulating layer onto a surface of an electrode active substance layer to form an insulating layer thereon, wherein the composition for an insulating layer comprises an insulative microparticle, a binder for an insulating layer, and a solvent;

the electrode active substance layer comprises an electrode active substance and a binder for an electrode; and the binder for an insulating layer comprises a first binder having a difference in SP value from the solvent of $6 \text{ MPa}^{1/2}$ or smaller, and the binder for an electrode comprises a second binder having a difference in SP value from the solvent of $10 \text{ MPa}^{1/2}$ or larger.

13. The method for producing an electrode for a lithium ion secondary battery according to claim 12, wherein the solvent has an SP value of 20 to $30 \text{ MPa}^{1/2}$; the first binder has an SP value of 15 to $25 \text{ MPa}^{1/2}$; and the second binder has an SP value of 30 to $50 \text{ MPa}^{1/2}$.

14. The method for producing an electrode for a lithium ion secondary battery according to claim 12 or 13, wherein the solvent is at least one selected from the group consisting of N-methylpyrrolidone, N-ethylpyrrolidone, dimethylacetamide and dimethylformamide.

[1]

10

12A

12

11

13

## INTERNATIONAL SEARCH REPORT

| International application No. |
| --- |
| PCT/JP2019/003891 |

### A. CLASSIFICATION OF SUBJECT MATTER
Int.Cl. H01M4/13(2010.01)i, H01M4/139(2010.01)i, H01M4/62(2006.01)i, H01M10/052(2010.01)i, H01M10/058(2010.01)i

According to International Patent Classification (IPC) or to both national classification and IPC

### B. FIELDS SEARCHED

Minimum documentation searched (classification system followed by classification symbols)
Int.Cl. H01M4/13, H01M4/139, H01M4/62, H01M10/052, H01M10/058

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X <br> Y | WO 2016/052648 A1 (GS YUASA INTERNATIONAL LTD.) 07 April 2016, claims, paragraphs [0062]-[0076] & US 2017/0214037 A1 claims, paragraphs [0098]-[0122] & CN 106716684 A | 1-7, 9-11 <br> 8 |
| X | JP 2018-4336 A (NEC CORP.) 11 January 2018, claims, paragraphs [0156], [0174]-[0175] (Family: none) | 1-14 |

☒ Further documents are listed in the continuation of Box C.    ☐ See patent family annex.

| | |
| --- | --- |
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| 09 April 2019 (09.04.2019) | 23 April 2019 (23.04.2019) |

| Name and mailing address of the ISA/ <br> Japan Patent Office <br> 3-4-3, Kasumigaseki, Chiyoda-ku, <br> Tokyo 100-8915, Japan | Authorized officer <br> <br> Telephone No. |
| --- | --- |

Form PCT/ISA/210 (second sheet) (January 2015)

**INTERNATIONAL SEARCH REPORT**

| | International application No. |
|---|---|
| | PCT/JP2019/003891 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2010-113966 A (TOYOTA MOTOR CORP.) 20 May 2010, claims, paragraphs [0019]-[0021], [0026], [0041]-[0044] & US 2011/0206977 A1 claims, paragraphs [0032]-[0035], [0040], [0058]-[0063] & WO 2010/053157 A1 & CN 102210043 A & KR 10-2011-0081286 A | 1-7, 9-14<br>8 |
| X<br>Y | JP 2009-54455 A (SONY CORP.) 12 March 2009, claims, paragraphs [0051], [0070]-[0073] & US 8927155 B2 column 9, lines 57-67, column 13, line 21 to column 14, line 15 & CN 101378135 A & KR 10-2009-0023196 A | 1-7, 9-14<br>8 |
| X<br>Y | JP 2013-16456 A (SONY CORP.) 24 January 2013, claims, paragraphs [0321]-[0323] & US 2012/0316716 A1 claims, paragraphs [0363]-[0365] & CN 102820483 A | 1-7, 9-14<br>8 |
| X<br>Y | WO 2014/054355 A1 (HITACHI MAXELL, LTD.) 10 April 2014, claims, paragraphs [0133], [0147] (Family: none) | 1-7, 9-14<br>8 |
| X<br>Y | WO 2017/061064 A1 (SONY CORP.) 13 April 2017, claims, paragraphs [0191]-[0194], [0259] & US 2018/0226675 A1 claims, paragraphs [0203]-[0206], [0263] & JP 2017-73318 A & EP 3352282 A1 & KR 10-2018-0049046 A & CN 108140890 A | 1-7, 9-14<br>8 |
| X<br>Y | JP 2015-69783 A (HITACHI HIGH-TECHNOLOGIES CORP.) 13 April 2015, claim 12, paragraphs [0051]-[0066], [0107]-[0122] (Family: none) | 1, 3-6, 9-10<br>2, 7-8, 11 |
| Y | JP 2014-11019 A (NIPPON ZEON CO., LTD.) 20 January 2014, paragraph [0089] (Family: none) | 2 |
| Y | JP 2014-13778 A (SANYO ELECTRIC CO., LTD.) 23 January 2014, paragraph [0044] (Family: none) | 7 |
| Y | JP 2017-195129 A (NGK INSULATORS, LTD.) 26 October 2017, claim 9, paragraph [0019] (Family: none) | 8 |
| Y | JP 2016-181324 A (HITACHI MAXELL LTD.) 13 October 2016, claims & WO 2015/022862 A1 | 11 |
| P, X | WO 2018/155207 A1 (NEC CORP.) 30 August 2018, claims, paragraphs [0092], [0099], [0122], [0138]-[0141] (Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016104782 A